# EUROPÄISCHE PATENTSCHRIFT

(11) **EP 0 483 600 B1**
(45) Veröffentlichungstag und Bekanntmachung des Hinweises auf die Patenterteilung: **02.01.1997**
(21) Anmeldenummer: 91117633.7
(22) Anmeldetag: 15.10.1991
(51) Int. Cl.: G06K 19/06

(54) **Kraftfahrzeugfelge mit Codierstruktur**
Motor vehicle rim having code structure
Jante pour véhicule automobile ayant une structure d'un code

(30) Priorität: 29.10.1990 DE 4034415
(43) Veröffentlichungstag der Anmeldung: 06.05.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Bauer, Norbert, W-8520 Erlangen (DE)
(74) Vertreter: Schoppe, Fritz, Dipl.-Ing.

(56) Entgegenhaltungen:
- DE-A- 2 232 091
- DE-A- 2 947 745
- DE-A- 3 413 288

## Beschreibung

Die vorliegende Erfindung betrifft eine Kraftfahrzeugfelge mit einer mittels einer Bildverarbeitungseinrichtung erfaßbaren und decodierbaren Codierstruktur zur Identifikation des Felgentypes.

Mit optischen Mitteln, insbesondere mit Mitteln der Bildverarbeitung erfaßbare Codierstrukturen sind seit geraumer Zeit bekannt. Eine der bekanntesten Codierstrukturen ist dem Fachmann als sogenannter Barcode oder Strichcode bekannt. Diese bekannte Codierstruktur ist üblicherweise in Form von einer Vielzahl von schwarzen strichförmigen oder balkenförmigen Aufdrucken ausgeführt, wobei die einzelnen strichartigen oder balkenartigen Elemente dieser typischerweise auf einen Aufkleber oder eine Verpackung aufgedruckten Codestruktur einen durch ihre Breite dargestellten Informationsgehalt haben. Typischerweise besteht ein solcher Barcode demnach aus einer Mehrzahl von parallel zueinander in gleichen Abständen angeordneten aufgedruckten Balkenmustern, wobei die einzelnen Balken entweder eine niedrige oder eine hohe Strichbreite haben. Für die Erfassung eines solchen Barcodes bedient man sich üblicherweise optischer Lesegeräte mit einem Erfassungsfenster, über das der Barcode in direkter Anlage gegen das Erfassungsfenster geführt wird. Demnach eignet sich eine solche Codierstruktur vor allem für die Bezeichnung von Gegenständen, bei denen die Erfassung des Codes bei einer festliegenden räumlichen Beziehung des Barcodes gegenüber der Barcodeleseeinrichtung, vorzugsweise bei direkter Anlage gegen das Erfassungsfenster derselben, durchführbar ist.

Da es sich bei einem Barcode ferner um eine relativ feingliedrige Struktur handelt, können nur Gegenstände mit einem Barcode versehen werden, die entweder direkt oder mittels eines Aufklebers mit einem Codieraufdruck versehen werden können. Es treten jedoch Anwendungsfälle auf, bei denen dies nicht möglich ist. Ein derartiger Anwendungsfall tritt beispielsweise bei der Fertigung von Leichtmetallfelgen für Kraftfahrzeuge auf. Hier ist es erforderlich, jede Felge mit einer Codierung zu versehen, die den Felgentyp bezeichnet. Die Verwendung von Codierstrukturen tragenden Aufklebern ist hier in der Regel nicht möglich. Die direkte Einprägung einer Barcodestruktur in die Felge führt nicht zu einer ausreichend sicheren Felgenidentifizierung, da bei dem Gießvorgang der Felge Verschmutzungen und Gradbildungen auftreten. Ferner ergeben sich bei einer Serienfertigung Werkzeugabnutzungen der Gußform, die gleichfalls einer Decodierung einer eingegossenen Barcodestruktur entgegenstehen. Ferner ist es bei der optischen Identifizierung von Leichtmetallfelgen nicht möglich, einen völlig gleichbleibenden Abstand einer Bildverarbeitungseinrichtung zum Erfassen der Codierstruktur von der auf der Felge angeordneten Codierstruktur zu gewährleisten, was zur weiteren Erhöhung der Erkennungsfehlerrate bei Verwenden bekannter Codierstrukturen führt.

Aus der DE 31 20 243 A1 ist bereits eine Codierstruktur bekannt, die mittels einer Bildverarbeitungseinrichtung erfaßbar und decodierbar ist. Die bekannte Codierstruktur umfaßt mehrere erhabene Codierkörper von jeweils im wesentlichen gleichbleibender Breite, die jeweils unterschiedliche Höhen haben, wobei die unterschiedlichen Höhen der codierten Information entsprechen. Auch bei dieser Art der Codierung führen sich ändernde Abstände zwischen der Bildverarbeitungseinrichtung und der Codierstruktur zu möglichen Erkennungsfehlern.

Aus der EP-A-0296024 ist bereits ein metallisches Etikett bekannt, welches neben einer alphanumerischen Information diese Information in einer Strichcodeform umfaßt. Der Strichcode umfaßt balkenförmige Strichmuster mit zwei verschiedenen Breiten, die gegeneinander mit entweder einem ersten, geringen Abstand oder einem zweiten, großen Abstand versetzt sind. Dieser Strichcode ist mit einer optoelektronischen Erfassungseinrichtung lesbar.

Ausgehend von diesem Stand der Technik liegt der vorliegenden Erfindung die Aufgabe zugrunde, eine Kraftfahrzeugfelge mit einer mittels einer Bildverarbeitungseinrichtung erfaßbaren und decodierbaren Codierstruktur zur Identifikation des Felgentypes so weiterzubilden, daß eine hohe Decodiersicherheit auch bei relativ hohen Toleranzen der Codierstruktur sowie der relativen Anordnung der Felge zu der Bildverarbeitungseinrichtung erzielt wird.

Diese Aufgabe wird gemäß der Erfindung durch eine Kraftfahrzeugfelge nach Patentanspruch 1 gelöst.

Der Erfindung liegt die Erkenntnis zugrunde, daß eine besonders sichere Decodierung der durch die Codierstruktur dargestellten Information dadurch erzielt wird, daß diese wenigstens zwei sich parallel zueinander an der Oberfläche des Gegenstandes ausgebildete Markierungskörper von jeweils etwa gleicher Breite umfaßt, wobei der seitliche Abstand wenigstens eines der Markierungskörper zu einem weiteren Markierungskörper einen von der codierten Information abhängigen Wert hat.

Da im Gegensatz zu der Barcodestruktur nach dem Stand der Technik bei der erfindungsgemäßen Kraftfahrzeugfelge mit Codierstruktur die Information der Codierstruktur nicht in der Breite eines Aufdruckes, sondern im gegenseitigen Abstand der Markierungskörper von jeweils etwa gleicher Breite liegt, ist es möglich, die Codierstruktur im einfachsten Fall als erhabene Rillen oder Vertiefungen auszuführen, die umlaufend um das Felgenbett ausgebildet sind.

Vorzugsweise ändert sich der die codierte Information darstellende Abstand des wenigstens einen Markierungskörpers zu dem weiteren Markierungskörper in Abhängigkeit von der Information in diskreten Abstandsschritten. Bei geeigneter Wahl der Abstandsschritte ist es somit möglich, trotz Maßstabsänderungen durch einen von Fall zu Fall schwankenden Abstand der auswertenden Bildverarbeitungseinrichtung zu der Codierstruktur zu einer zuverlässigen Decodierung zu gelangen, wobei es beispielsweise bei extrem schwankenden Abstandsverhältnissen möglich ist, jeweils zwei der wenigstens drei Markierungskörper, die vorzugsweise die äußersten Markierungskörper der Codierstruktur sind, immer in einem gleichen Abstand anzuordnen, der als Bezugsgröße bei der Decodierung des Codes dient.

Die erfindungsgemäße Codierstruktur eignet sich bevorzugt für die Identifikation eines Felgentypes einer gegossenen Kfz-Leichtmetallfelge.

Nachfolgend wird unter Bezugnahme auf die beiliegenden Zeichnungen ein bevorzugtes Ausführungsbeispiel der erfindungsgemäßen Codierstruktur näher erläutert.

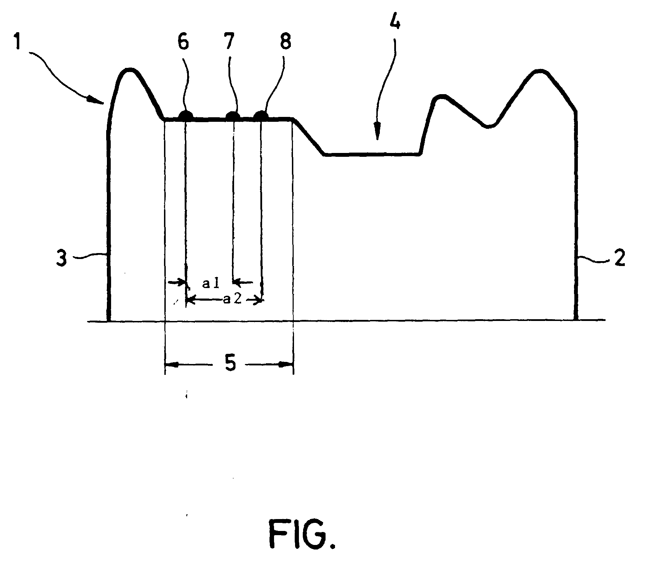

Es zeigt:
- die einzige Fig.: eine Profilansicht einer Kraftfahrzeugfelge mit einer daran angebrachten, erfindungsgemäßen Codierstruktur zur Identifikation des Felgentypes.

Wie in der einzigen Figur gezeigt ist, hat eine Kraftfahrzeug-Leichtmetallfelge, die in ihrer Gesamtheit mit dem Bezugszeichen 1 bezeichnet ist, und die in einer Halbprofilansicht dargestellt ist, eine Speichenseite 2, eine der Speichenseite gegenüberliegende Nabenseite 3 und ein Felgenbett 4. Das Felgenbett 4 hat typischerweise einen ebenen, zylindermantelförmigen Bereich 5, der im Bereich des Felgenbettes 4 auf der der Speichenseite 2 abgewandten Seite liegt.

In Umfangsrichtung des Felgenbettes 4 liegen innerhalb des ebenen Bereichs 5 drei Markierungskörper 6, 7, 8, die bei dem gezeigten Beispielsfall die Form von erhabenen Rillenkörpern aufweisen. Die Rillenkörper 6, 7, 8 haben eine in etwa gleiche Breite, die für die codierte Information unmaßgeblich ist. Die codierte Information der durch die Rillenkörper 6, 7, 8, gebildeten Codierstruktur wird definiert durch den Abstand des Rillenkörpers 7 von den anderen Rillenkörpern 6, 8. Der Abstand der Rillenkörper 6, 7, 8 ändert sich in Abhängigkeit von der codierten Information um diskrete Abstandsschritte, deren Ausmaß so gewählt ist, daß Maßstabsverschiebungen der von einer Bildverarbeitungseinrichtung (nicht dargestellt) erfaßten Codierung aufgrund von Abstandsvariationen zwischen der Bildverarbeitungseinrichtung und der Kraftfahrzeug-Leichtmetallfelge 1 in jedem Fall geringer sind als 50 % diskreten Abstandsschrittes. Für den Fachmann ist es offensichtlich, daß die untere zulässige Grenze für einen diskreten Abstandsschritt somit vom Anwendungsfall abhängt. Typischerweise liegt ein diskreter Abstandsschritt bei einem Wert zwischen einem und zwanzig Millimetern.

Bei dem gezeigten Ausführungsbeispiel haben die Markierungskörper die Gestalt von erhabenen Rillenkörpern 6, 7, 8. Ebenso können sie in die Leichtmetallfelge in Form von vertieften Rillen bzw. Rillenausnehmungen eingebracht sein.

Das gezeigte Ausführungsbeispiel zeigt drei Markierungskörper. Für den Fachmann ist es offenkundig, daß je nach Komplexität der zu codierenden Information auch eine beliebig höhere Anzahl von Markierungskörpern vorgesehen sein kann.

## Patentansprüche

1. Kraftfahrzeugfelge (1) mit einer mittels einer Bildverarbeitungseinrichtung erfaßbaren und decodierbaren Codierstruktur zur Identifikation des Felgentypes,
wobei die Codierstruktur wenigstens zwei sich parallel zueinander erstreckende, an der Oberfläche des Felgenbetts (4) in dessen Umfangsrichtung verlaufende Markierungskörper (6, 7, 8) von jeweils gleicher Breite umfaßt, und
der seitliche Abstand wenigstens eines der Markierungskörper (7) zu einem weiteren Markierungskörper (6) einen von dem codierten Felgentyp abhängigen Wert hat.

2. Kraftfahrzeugfelge nach Anspruch 1, bei der die Markierungskörper als erhabene Rillenkörper (6, 7, 8) ausgebildet sind.

3. Kraftfahrzeugfelge nach Anspruch 1, bei der die Markierungskörper als rillenförmige Vertiefungen oder Ausnehmungen des Felgenbettes ausgebildet sind.

## Claims

1. A motor vehicle rim (1) having a code structure which is adapted to be detected by means of an image processor and decoded and which is used for identifying the type of rim,
said code structure comprising at least two mark elements (6, 7, 8) extending parallel to one another on the surface of the rim well (4) in the circumferential direction of said rim well (4), said mark elements (6, 7, 8) having the same width, and
the lateral distance of at least one of said mark elements (7) to another one of said mark elements (6) having a value that depends on the coded type of rim.

2. A motor vehicle rim according to claim 1, wherein the mark elements are raised groove bodies (6, 7, 8).

3. A motor vehicle rim according to claim 1, wherein the mark elements are groove-shaped depressions or recesses in the rim well.

## Revendications

1. Jante (1) pour véhicule automobile avec une structure de code, pouvant être captée et décodée à l'aide d'un dispositif de traitement d'images, pour l'identification du type de jante,
dans laquelle la structure de code comporte au moins deux éléments de marquage (6, 7, 8) s'étendant parallèles entre eux, situés à la surface du lit de jante (4), dans le sens du pourtour de celui-ci, chacun de même largeur, et
la distance latérale entre au moins l'un des éléments de marquage (7) et un autre élément de marquage (6) a une valeur qui est fonction du type de jante codé.

2. Jante pour véhicule automobile suivant la revendication 1, dans laquelle les éléments de marquage se présentent sous forme d'éléments de strie en relief (6, 7, 8).

3. Jante pour véhicule automobile suivant la revendication 1, dans laquelle les éléments de marquage se présentent sous forme de creux ou d'évidements en forme de rainures du lit de jante.
